# EUROPÄISCHE PATENTSCHRIFT

(11) **EP 1 379 790 B1**
(45) Veröffentlichungstag und Bekanntmachung des Hinweises auf die Patenterteilung: **29.06.2005**
(21) Anmeldenummer: 02730096.1
(22) Anmeldetag: 03.04.2002
(51) Int. Cl.: F16B 35/04, F16B 17/00

(54) **VERFAHREN ZUR HERSTELLUNG EINES ZUSAMMENBAUTEILS BESTEHEND AUS EINEM BLECHTEIL UND EINEM GEWINDESTIFT SOWIE ZUSAMMENBAUTEIL.**
METHOD FOR PRODUCING A STRUCTURAL MEMBER COMPRISING A METAL SHEET AND A SET SCREW AND STRUCTURAL MEMBER.
PROCEDE DE FABRICATION D'UN ELEMENT DE CONSTRUCTION COMPRENANT UNE PARTIE EN TOLE ET UNE TIGE FILETEE AINSI QUE L'ELEMENT DE CONSTRUCTION.

(30) Priorität: 18.04.2001 DE 10118973
(43) Veröffentlichungstag der Anmeldung: 14.01.2004
(73) Patentinhaber: Profil Verbindungstechnik GmbH & Co. KG, 61381 Friedrichsdorf (DE)
(72) Erfinder: HOESSRICH, Wolfgang, 61476 Kronberg (DE)
(74) Vertreter: Manitz, Finsterwald & Partner GbR
(86) Internationale Anmeldenummer: PCT/EP2002/003696
(87) Internationale Veröffentlichungsnummer: WO 2002/084131

(56) Entgegenhaltungen:
- EP-A- 0 171 348
- EP-A- 0 477 517
- WO-A-02/31278
- DE-A- 3 213 733
- US-A- 3 060 562
- US-A- 5 797 175
- PATENT ABSTRACTS OF JAPAN vol. 018, no. 598 (M-1704), 15. November 1994 (1994-11-15) & JP 06 226376 A (KITAURA KOGYO KK), 16. August 1994 (1994-08-16)

## Beschreibung

Die vorliegende Erfindung betrifft ein Verfahren zur Herstellung eines Zusammenbauteils bestehend aus einem Blechteil und einem an diesem angebrachten Gewindestift, d.h. ein Stift in Form einer Gewindelänge mit Außengewinde sowie ein nach dem Verfahren hergestelltes Zusammenbauteil.

Ein Verfahren der oben genannten Art ist in der europäischen Patentanmeldung mit der Veröffentlichungsnummer EP-A-0 993 902 beschrieben. In diesem Zusammenhang wird auf die dortigen Figuren 3E bis 3G, 5, 6A, 6B und 17A-17E verwiesen. In allen dort gezeigten Ausführungsbeispielen wird im Blechteil eine zylindrische Vertiefung gebildet, in die ein Gewindestift aufgenommen wird, ohne daß der Gewindestift das Blechteil durchlocht und Blechmaterial wird im Bereich der zylindrischen Vertiefung in die Gewindegänge des Gewindestifts eingepreßt und auch in Vertiefungen eingebracht, die der Verdrehsicherung dienen.

Auf diese Weise gelingt es, einen preisgünstigen Gewindestift an ein Blechteil formschlüssig zu befestigen, so daß mittels einer Mutter ein weiteres Bauteil auf dem Blechteil befestigt werden kann. Das bisherige Verfahren ist auch mit verhältnismäßig dünnen Blechteilen zu verwenden, da die zylindrische Vertiefung über eine gewisse axiale Länge des Gewindestifts formschlüssig mit diesem befestigt ist, so daß eine hochwertige Verbindung zustande kommt.

Aufgabe der vorliegenden Erfindung ist es, ein alternatives Verfahren zum Anbringen eines Funktionselements in Form eines Gewindestifts in ein Blechteil vorzusehen, daß preisgünstig durchführbar ist und nicht nur mit dünnen Blechstärken, sondern auch mit dickeren Blechen angewandt werden kann.

Zur Lösung dieser Aufgabe wird erfindungsgemäß ein Verfahren der eingangs genannten Art vorgesehen, daß sich dadurch auszeichnet, daß im Blechteil eine konusförmige Erhöhung mit einem mittig angeordneten Loch erzeugt wird, wobei das Loch zumindest im wesentlichen dem Außendurchmesser des Gewindes des Gewindestiftes entspricht, daß ein Bereich des Gewindestiftes in das Loch eingesetzt wird, wobei dieser Bereich des Gewindestiftes, der in direkter Verbindung mit dem Blechteil anzubringen ist, entweder von der Seite der konusförmigen Erhöhung des Blechteiles oder von der anderen Seite in das Blechteil eingeführt wird und daß die konusförmige Erhöhung anschließend zumindest teilweise flachgepreßt wird und hierdurch Blechmaterial radial nach innen in mehrere Gewindegänge des Gewindestiftes hineingeschoben wird.

Bereits durch die zumindest teilweise erfolgende Flachpressung der konusförmigen Erhöhung kann ausreichendes Blechmaterial in das Gewinde des Gewindestifts hineingeschoben werden, um eine feste Anbringung des Gewindestifts am Blechteil sicherzustellen. Die auf diese Weise erzeugten Kompressionskräfte im Blechmaterial führen zu einem permanenten kompressiven Druck zwischen dem Blechmaterial und dem Gewindestift, wodurch eine gewisse Verdrehsicherung erreichbar ist. Eine Möglichkeit diese Verdrehsicherung zu steigern, liegt darin, die Gewindegänge des Gewindestifts, die in Berührung mit dem Blechteil gelangen, mit einem Klebstoff zu versehen, der unter Druck aushärtet. Da die Gewindegänge, die in Berührung mit dem Blechteil gelangen, aufgrund der Gewindeform eine relativ große Fläche einnehmen, kann auf diese Weise eine sehr feste Verbindung zwischen Gewindestift und Blechteil erreicht werden. Auch kann auf diese Weise dafür gesorgt werden, daß eine flüssigkeits- und gegebenenfalls auch fluiddichte Verbindung zwischen dem Gewindestift und dem Blechteil erreicht wird.

An dieser Stelle soll kurz auf die DE 3213733 A hingewiesen werden. Diese Schrift beschreibt eine Möglichkeit, eine normale Schraubverbindung bestehend aus einer auf einem Bolzen aufgeschraubten Mutter für Dritte unzugänglich zu machen. Zu diesem Zweck ragt das Gewinde des Bolzens um einige Gewindegänge durch die Mutter hindurch und ein Blechteil wird über mindestens zwei benachbarte Gewindeenden gelegt und anschließend im Bereich der Gewindeenden flach gepresst. Hierdurch wird die Mutter so vom Blechteil abgedeckt, dass es nicht abgeschraubt werden kann, da das Blechteil nur mit zerstörerischen Kräften entfernt werden kann. Dabei ist die Blechdicke kleiner als die Steigung des Gewindes. Demzufolge greift das Blech auch nicht in mehrere Gewindegänge des Gewindes ein.

Es handelt sich also bei dem Vorschlag nicht um eine Verbindung zwischen einem Gewindestift und einem Blechteil.

Ein Vorteil des erfindungsgemäßen Verfahrens ist, daß der Gewindestift so im Blechteil eingebracht werden kann, daß er auf beiden Seiten aus dem Blechteil vorsteht. D.h., die beiden Enden des Gewindestifts können für die Anbringung von weiten Bauteilen benutzt werden. Beispielsweise könnte mit einem Gewindestift dieser Art eine Bremsleitung auf einer Seite des Blechteils und eine Kraftstoffleitung auf der anderen Seite des Blechteils mit ein und demselben Gewindestift befestigt werden.

Eine weitere Möglichkeit, die Verdrehsicherung zu steigern, liegt darin, den Bereich eines Gewindestifts, der in direkte Verbindung mit dem Blechmaterial gebracht wird, mit Verdrehsicherungsmerkmalen auszustatten, beispielsweise mit sich in Längsrichtung des Stiftes erstreckenden Vertiefungen, die das Gewinde stellenweise unterbrechen, wobei das Blechmaterial bei der zumindest teilweisen Flachpressung der konusförmigen Erhöhung sowohl in das Gewinde als auch gegen die Verdrehsicherungsmerkmale bzw. in etwaige eine Verdrehsicherung bildende Vertiefungen geschoben wird. Solche formgebende Verdrehsicherungsmerkmale am Gewindestift lassen sich bereits bei der Herstellung des Gewindes mit einrollen, so daß eine kostengünstige Herstellung des Gewindestifts in einem kontinuierlichen Walzverfahren und eine materialverlustfreie Herstellung von Gewindestiften aus Draht- oder Stabmaterial möglich ist.

Die Vorlochung des Blechteils wird vorzugsweise so vorgenommen, daß die konusförmige Erhöhung des Blechteils an der erhöhten Seite eine durch eine Ringfase gebildete Mündung aufweist, wobei der Fasenwinkel der Ringfase zur axialen Richtung des Loches zwischen 30° und 60°, vorzugsweise bei etwa 40° gewählt wird. Eine solche Ringfase erleichtert die zentrierte Einführung des Gewindestifts. Besonders günstig ist es, wenn die konusförmige Erhöhung im Blechteil mit einer zylindrischen Wand parallel zur Achse des Loches ausgebildet ist, wobei die axiale Länge dieser zylindrischen Wand vorzugsweise im Bereich zwischen 40 und 100 % der Blechstärke, insbesondere bei etwa 60 % der Blechstärke liegt. In diesem Bereich liegt das Blechmaterial bereits bei Einführung des Gewindestifts vor Flachpressung der konusförmigen Erhöhung am äußeren Umfang des Gewindestifts an, was ebenfalls der Zentrierung des Gewindestifts und der gleichmäßigen Umformung des Blechmaterials in die Gewindegänge des Gewindestifts hinein zu Gute kommt. Ein Loch mit dieser Formgebung, d.h. eine konusförmige Erhöhung mit einer Ringfase an der Mündung des Loches im Bereich der erhöhten Seite der konusförmigen Erhöhung sowie eine zylindrische Lochwand läßt sich ohne weiteres durch ein Stanzverfahren erzeugen und kann daher kostengünstig realisiert werden.

Eine bevorzugte Ausführungsform des erfindungsgemäßen Verfahrens zeichnet sich dadurch aus, daß ein Teil des Gewindestiftes, der benachbart zum Bereich angeordnet ist, der in direkte Verbindung mit dem Blechteil zu bringen ist, in eine Bohrung eines Werkzeugs aufgenommen wird, so daß der genannte Bereich vor einer Stirnseite des Werkzeuges vorsteht, daß das Blechteil auf einer Unterlage mit einer ebenen Stirnseite abgestützt wird, wobei das Loch in der konusförmigen Erhöhung mit der Längsachse des Gewindestifts ausgerichtet wird und daß das Werkzeug gegen das Blechteil gedrückt wird, so daß der Bereich des Gewindestifts, der in direkte Verbindung mit dem Blechmaterial gebracht werden soll, in das Loch des Blechteils eingeführt wird und die konusförmige Erhöhung gleichzeitig zwischen dem Werkzeug und der Unterlage flachgepreßt wird.

Diese Variante des erfindungsgemäßen Verfahrens stellt eine zuverlässige Flachpressung der konusförmigen Erhöhung sicher und gewährleistet gleichzeitig, daß der im Blechteil eingebrachte Gewindestift senkrecht zu der Blechebene im Bereich der Anbringung steht.

Das Verfahren kann so ausgeführt werden, daß die Unterlage einen gefederten Stößel aufweist mit einem stiftartigen Ende, das durch die das Blechteil abstützende Seite der Unterlage hindurchragt und in die konusförmige Vertiefung soweit hineinragt, daß das Blechteil hierdurch zentriert wird, wobei die Unterlage vorzugsweise aus einer Matrize ausgebildet ist, die koaxial zum Gewindestift und zur Bohrung des Werkzeugs, das den Gewindestift aufnimmt, angeordnet ist.

Besonders günstig ist es, wenn das Werkzeug um den vorstehenden Bereich des Gewindestifts herum, eine über seine Stirnseite vorstehende Ringlippe aufweist, die in radialer Richtung vom Gewindestift einen Abstand aufweist und dessen axiale Höhe in Längsrichtung des Gewindestiftes kleiner ist als die Stärke des Blechmaterials und daß bei der Anbringung des Gewindestiftes am Blechteil die Ringlippe in das Blechmaterial hineingedrückt wird und eine entsprechende Ringvertiefung im Blechmaterial ausbildet, wodurch ebenfalls Blechmaterial in das Gewinde hineingedrückt und in Berührung mit etwaigen am Gewindestift vorgesehenen Verdrehsicherungsmerkmalen gebracht wird.

Die Ringlippe verdünnt zwar das Blechteil geringfügig im Bereich der Anbringung des Gewindestifts, sorgt aber auch dafür, daß Blechmaterial radial nach innen in Eingriff mit den Gewindegängen des Gewindestifts und mit dort vorgesehenen Verdrehsicherungsmerkmalen fließt, wodurch die Festigkeit der Verbindung des Gewindestifts am Blechteil insgesamt verbessert werden kann.

Besonders günstig ist es, wenn die Ringlippe auf der radial inneren Seite eine Schrägfläche aufweist, die zumindest im wesentlichen der Schrägfläche der konusförmigen Erhöhung des Blechteils entspricht, wodurch das Blechteil zumindest im wesentlichen mit dem Gewindestift bei dessen Anbringung zentriert wird.

Besonders günstig ist, wenn innerhalb der Ringlippe eine Ringvertiefung vorgesehen ist, die von der Stirnseite des Werkzeuges zurückversetzt ist, wodurch Blechmaterial, das von der Ringlippe verschoben wird, auch in diese Ringvertiefung hineingedrückt wird und das Blechmaterial hierdurch in Berührung mit dem Gewindestift über einen axialen Bereich gelangt, der die Blechstärke übersteigt. Hierdurch wird eine verbesserte Verdrehsicherung erreicht.

Im gleichen Sinne ist es günstig, wenn die Unterlage, ausgerichtet mit dem Loch des Blechteils, eine Vertiefung aufweist, die einen Teil des Gewindestiftes aufnimmt und um den Gewindestift herum einen Freiraum bildet, in den Blechmaterial beim Anbringungsverfahren ebenfalls hineingedrückt wird, wodurch sich die Verbindung zwischen dem Blechteil und dem Gewindestift über eine axiale Länge des Gewindestifts erstreckt, die die Blechdicke übersteigt. Auch hierdurch kann eine erhöhte Festigkeit der Anbringung des Gewindestifts am Blechteil erreicht werden.

Durch die Anwendung des erfindungsgemäßen Verfahrens ergeben sich besonders günstige Zusammenbauteile, wie sie in den Patentansprüchen 14 bis 20 beansprucht sind.

Das erfindungsgemäße Verfahren bzw. erfindungsgemäße Zusammenbauteil werden nachfolgend näher erläutert anhand von Ausführungsbeispielen unter Bezugnahme auf die beigefügten Zeichnungen, in welchen zeigen:
- Fig. 1: eine Darstellung eines erfindungsgemäßen Gewindestifts in Seitenansicht, wobei die Längsachse des Gewindestifts mit einer gelochten konusförmigen Erhöhung in einem Blechteil ausgerichtet ist,
- Fig. 2: eine Darstellung des Gewindestifts und des Blechteils der Figur 1 nach Anbringung des Gewindestifts am Blechteil,
- Fig. 3 bis Fig 5: drei Zeichnungen, um die Anbringung des Gewindestifts am Blechteil zu erläutern,
- Fig. 6: eine modifizierte Vorrichtung für die Anbringung des Gewindestifts am Blechteil,
- Fig. 7, 8 und 9: drei weitere Skizzen, um die Anbringung des Gewindestifts am Blechteil mittels eines abgewandelten erfindungsgemäßen Verfahrens zu erläutern und
- Fig. 10: eine Darstellung des fertiggestellten Zusammenbauteils nach Durchführung des Verfahrens gemäß Fig. 7 bis 9.

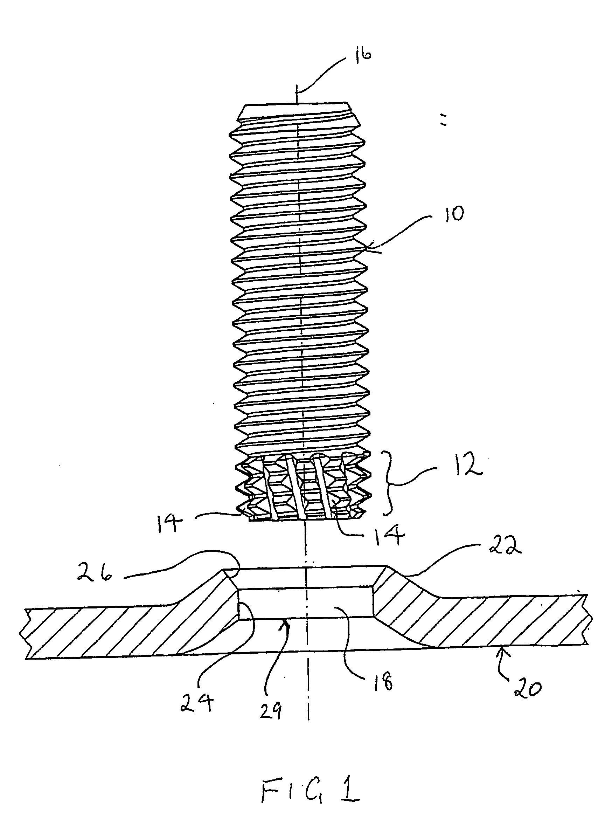

Der Gewindestift 10 der Figur 1 entspricht im wesentlichen dem bekannten Gewindestift nach der EP-A-0 993 902 der auch beim vorliegenden Verfahren zur Anwendung gelangen kann. In dieser Ausführungsform sind Verdrehsicherungsmerkmale, die im Bereich der unteren drei Gewindegänge 12 zu sehen sind und welche die Form von schräggestellten, im Querschnitt in etwa V-förmigen Kerben 14 aufweisen, mit einer Tiefe entsprechend der Gewindetiefe in den Gewindestift hineingeformt. Bei dieser Ausführungsform sind zwölf solche Kerben 14 vorgesehen, sie sind gleichmäßig um den Umfang des Gewindestifts herum verteilt und haben jeweils einen eingeschlossenen V-Winkel von etwa 60°. Die Kerben sind so ausgerichtet, daß ihre Längsrichtung in etwa senkrecht zu den Gewindegängen steht. Es können auch mehr oder weniger als zwölf Kerben 14 vorgesehen werden.

Die mittlere Längsachse 16 des Gewindestifts ist koaxial zu einem Loch 18 ausgerichtet, das in einem Blechteil 20 vorgesehen ist, wobei das Loch 18 sich in der Mitte einer konusförmigen Erhöhung 22 des Blechteils 20 befindet. Das Loch 18 weist einen zylindrischen Randbereich 24 auf, der parallel zur mittleren Längsachse 16 steht sowie eine Ringfase 26, die an der dem Gewindestift zugewandten Seite des Lochs 18 angeordnet ist. Die Ringfase 26 ist Teil einer konusförmigen Fläche mit einem eingeschlossenen Konuswinkel von etwa 80°. Die Länge des zylindrischen Wandbereichs 24 des Lochs 18 erstreckt sich über eine Länge von vorzugsweise von 40 bis 100 % der Blechstärke, wobei diese Länge insbesondere bei etwa 60 % der Blechstärke liegt.

Die Blechvorbereitung zur Erzeugung eines Blechteils mit in etwa der Form der Figur 1 erfolgt vorzugsweise in einer Presse oder in einer entsprechenden Station eines Folgeverbundwerkzeugs. Nach Herstellung des Loches 18 in der konusförmigen Erhöhung 22 wird der Gewindestift dann mit dem Blechteil ausgerichtet, was in einem Setzkopf in einer Presse oder in einer weiteren Station eines Folgeverbundwerkzeugs erfolgen kann. Der Außendurchmesser des Gewindestifts 10 entspricht dem Innendurchmesser des Lochs 18 im Bereich der zylindrischen Wandung 24, so daß der Gewindestift in das Loch 18 eingesetzt werden kann. Dabei dient die Ringfase 26, zusammen mit dem entsprechenden leicht konusförmigen Stirnende des Gewindestifts 10 einer Zentrierung des Gewindestifts. Eine solche Anordnung ließe sich aber auch von einem Roboter zusammenfügen und kann auch unter Anwendung von Handwerkzeugen erreicht werden, wie später näher erläutert wird.

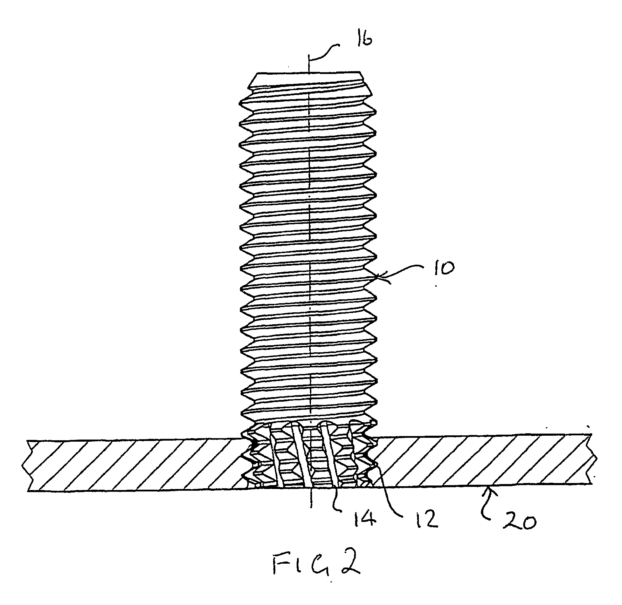

Das aus der Ausgangssituation gemäß Fig. 1 zusammengefügte Zusammenbauteil ist in Fig. 2 gezeigt. Man merkt, daß die konusförmige Erhöhung 22 im Blechteil in diesem Beispiel vollständig flachgepreßt ist, wodurch das Blechmaterial in die Gewindegänge 12 und in die die Verdrehsicherung bildenden Kerben hineingeflossen ist, wodurch erhebliche radial wirkende Kompressionskräfte vom Blechmaterial auf die Gewindegänge 12 ausgeübt werden und die Kerben 14 im übrigen für eine gesteigerte Verdrehsicherung sorgen.

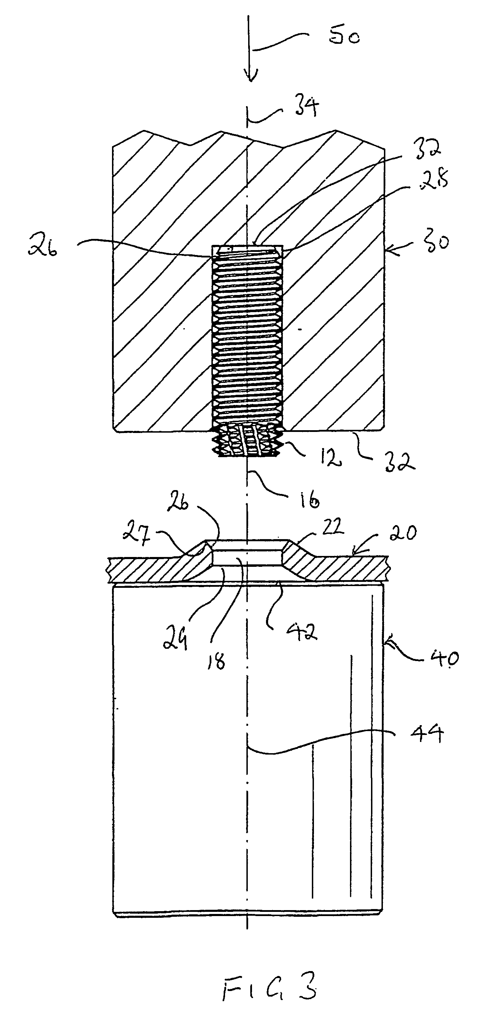

Ein erstes Werkzeug zur Anbringung des Gewindestifts 10 im Blechteil 20 ist in den Fig. 3 bis 5 gezeigt. Gemäß Fig. 3 wird der Gewindestift 10 in den zylindrischen Hohlraum 28 in der Stirnseite eines stempelartigen Werkzeugs 30 eingebracht, und zwar so, daß das obere Stirnende 26 des Gewindestifts am Boden 32 der Bohrung 28 abgestützt ist. Die Bohrung 28 weist einen Innendurchmesser auf, der entsprechend dem Außendurchmesser des Gewindestifts bemessen ist. Die unteren zweieinhalb bis drei Gewindegänge 12 des Gewindestifts ragen aus dem unteren Stirnende 32 des Werkzeugs 30 hervor. Das Blechteil 20 ist auf der Unterlage 40, beispielsweise in Form einer Matrize mit einer ebenen Stirnseite 42, die senkrecht zur mittleren Längsachse 44 der Matrize 40 steht, abgestützt, wobei die mittlere Längsachse 44 mit dem Loch 18 im Blechteil, mit der mittleren Längsachse 16 des Gewindestifts und demgemäß auch mit der Längsachse 34 des oberen Werkzeugs 30 flüchtet.

Wie gesagt kann es sich bei der Unterlage 40 um eine Matrize handeln, die beispielsweise in einem unteren Werkzeug einer Presse abgestützt ist. In diesem Falle gehört der Stempel 30 zu einem Setzkopf, der an einer Zwischenplatte der Presse oder an einem oberen Werkzeug der Presse befestigt ist. Es bestünde aber auch die Möglichkeit, die Matrize 40 an der Zwischenplatte einer Presse zu montieren und der Stempel 30 bzw. der entsprechende Setzkopf am oberen Werkzeug der Presse anzubringen. Genauso ist es möglich, umgekehrte Anordnungen zu treffen, d.h. das Werkzeug 30 am unteren Werkzeug der Presse oder an der Zwischenplatte der Presse anzubringen und die Matrize 40 dementsprechend an der Zwischenplatte der Presse oder am oberen Werkzeug der Presse zu montieren. Dies sind Möglichkeiten, die dem Fachmann bestens bekannt sind und sie werden daher hier nicht näher erläutert.

Es kann sich bei den Werkzeugen der Figur 3 aber auch um Werkzeuge handeln, die in einer Station eines Folgeverbundwerkzeugs vorgesehen sind oder das obere Werkzeug 30 und die Unterlage 40 könnten von einem Roboter aufeinander zu bzw. voneinander weg bewegt werden. Schließlich könnte es sich bei der Unterlage 40 und bei dem oberen Werkzeug 30 um einfache Werkzeuge handeln, damit der Gewindestift mit dem Blechteil durch Hammerschläge manuell gefügt werden kann.

Sollte befürchtet werden, beispielsweise mit einem relativ weichen Werkstoff des Gewindestifts 10, daß das Gewinde durch die aufgebrachten Preß- bzw. Hammerkräfte verformt wird, so kann das obere Werkzeug 30 so ausgelegt werden, wie in der PCT-Anmeldung PCT/EP00/06465 beschrieben, d.h. mit radial beweglichen Segmenten, die in das Gewinde eingreifen und somit verhindern, daß in axialer Richtung des Gewindestifts wirkende Kräfte zu einer Verformung des Gewindes führen.

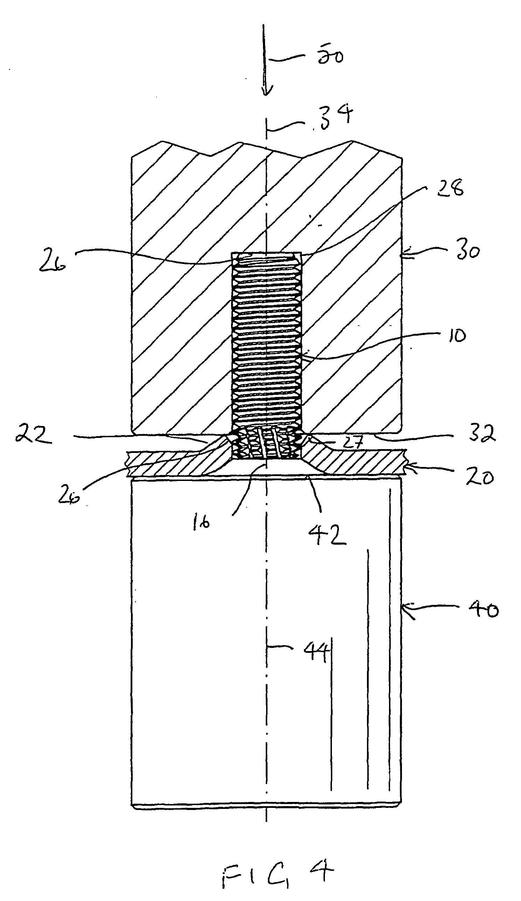

Figur 4 zeigt nun, daß die Lage des oberen Werkzeugs soweit nach unten gedrückt ist, daß die untere Stirnseite 32 des oberen Werkzeugs 30 mit der Ringlippe 27 der konusförmigen Erhöhung 22 des Blechteils in Berührung gelangt.

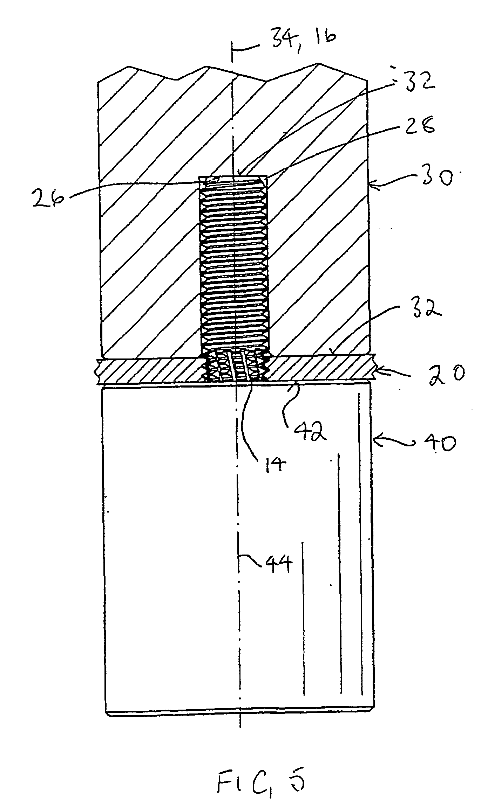

Figur 5 zeigt dann die Lage nach einer weiteren nach unten gerichteten Bewegung des oberen Werkzeugs 30 (Pfeil 50), bei der die konusförmige Erhöhung 22 zwischen der unteren Stirnseite 32 des oberen Werkzeugs und der oberen Stirnseite 42 der Matrize 40 festgeklemmt ist, wobei die konusförmige Erhöhung 22 vollständig flachgepreßt ist und das Blechmaterial, daß durch die Flachpressung der konusförmigen Erhöhung 22 gezwungen ist, radial nach innen zu fließen, vollständig in die Gewindegänge bzw. in die Kerben 14 eingeflossen ist.

Das fertige Zusammenbauteil gemäß Fig. 2 kann jetzt aus den Werkzeugen entnommen werden.

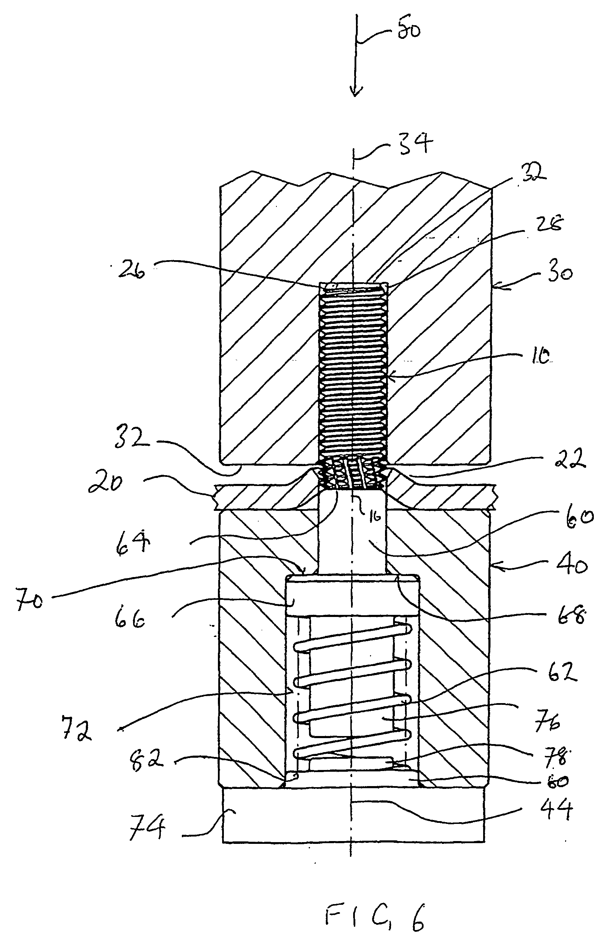

Figur 6 zeigt eine Modifikation des Verfahrens gemäß Figuren 3 bis 5, wobei das untere Werkzeug bzw. die Matrize 40 anders ausgelegt ist. Die Matrize 40 weist in diesem Beispiel einen mittig angeordneten, gefederten Stößel 60 auf, der von einer Schraubendruckfeder 62 nach oben geschoben wird, so daß die in Fig. 6 obere Stirnseite 64 des gefederten Stößels 60 an eine Stelle gelangt, die der unteren Begrenzung 29 des Lochs 18 im Blechteil 20 entspricht und hierdurch den Gewindestift 10 in der Ausgangsposition für die Flachpressung der konusförmigen Erhöhung 22 in der richtigen Ausrichtung mit dem Blechteil hält. Um diese definierte Stellung der Stirnseite 64 des Federstiftes 60 zu erreichen, ist dieser Federstift mit einem zylindrischen Bund 66 versehen, der eine ringförmige Schulter 68 bildet, die senkrecht zur mittleren Längsachse 44 der Matrize steht und an einer entsprechenden Abstützfläche 70 der Matrize 40 anliegt, die durch eine abgesetzte Bohrung 72 in der Matrize gebildet ist. Die Schraubendruckfeder 62 stützt sich in der Darstellung gemäß Figur 6 mit ihrem oberen Stirnende an der Unterseite des zylindrischen Bundes 66 und mit ihrem unteren Stirnende auf einer Abstützplatte 74 der Matrize 40 ab. Um die Feder gegenüber dem Stößel 60 zu zentrieren, weist dieser auf der Unterseite des Bundes einen zylindrischen Zapfen 76 auf. Die Platte 74 weist einen entsprechenden, jedoch kürzeren Zapfen 78 auf, der in einen kreisrunden Teil 80 größeren Durchmessers übergeht, der zentriert in die abgesetzte Bohrung 72 hineinpaßt. Zwischen dem Vorsprung 78 und dem kreisförmigen Teil 80 wird eine ringförmige Abstützfläche 82 gebildet, auf der das untere Ende der Schraubendruckfeder 62 sitzt bzw. drückt.

Wenn nun das obere Werkzeug 30 unter entsprechenden Kräften in Pfeilrichtung 50 nach unten bewegt wird, drückt das untere Stirnende des Gewindestifts 10 den gefederten Stößel 60 nach unten und diese Bewegung wird durch die Schraubendruckfeder 62 gestattet. Nach Fertigstellung des Zusammenbauteils dient dann der gefederte Stößel 60 auch der Entfernung des Zusammenbauteils aus den Werkzeugen (nach Anhebung des oberen Werkzeugs in der dem Pfeil 50 entgegengesetzten Richtung). Der gefederte Stößel 60 ist in diesem Beispiel aber außerdem nützlich, um das Blechteil 20 genau auszurichten, da das obere Stirnende des gefederten Stößels 60 in die konusförmige Erhöhung des Blechteils von der Unterseite hineinpaßt.

Sollte beabsichtigt werden, den Gewindestift 10 nicht an einem Ende mit dem Blechteil 20 zusammenzufügen, sondern beispielsweise so, daß das Blechteil 20 in einem mittleren Bereich der Länge des Gewindestifts mit diesem in Verbindung gelangt (wobei die Verdrehsicherungsmerkmale, falls vorhanden, entsprechend zu plazieren wären), so kann die Matrize 40 bzw. der gefederte Stößel 60 mit einer Blindbohrung vorgesehen werden, an deren Boden bzw. blinden Ende die Unterseite des Gewindestifts 64 abgestützt wird, so daß die Verbindung mit dem Blechteil dort erzeugt wird, wo sie gewollt ist.

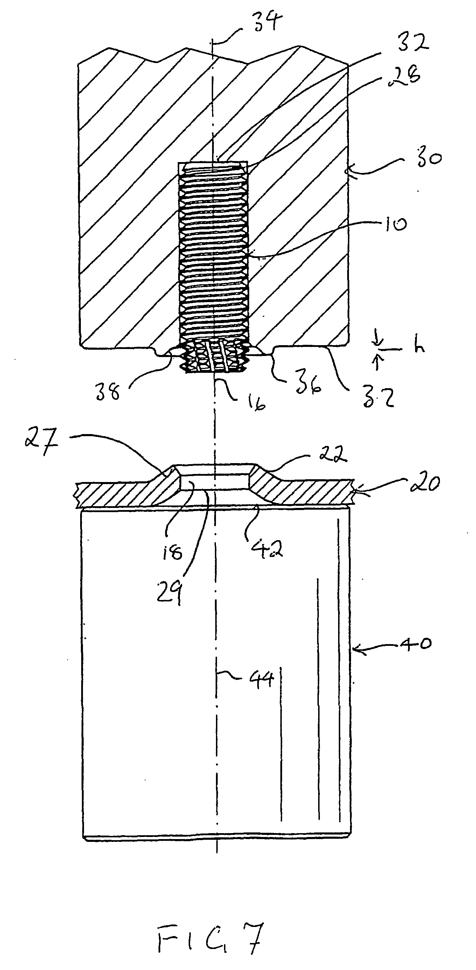

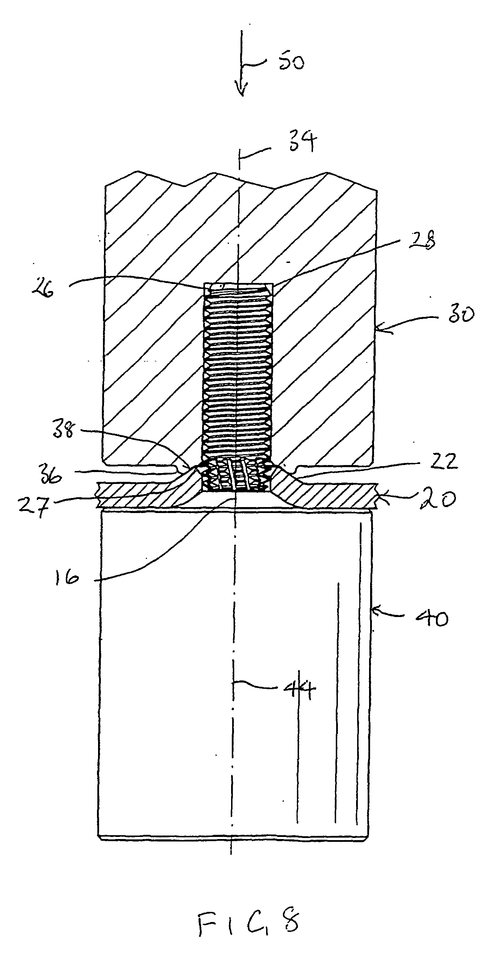

Die Figuren 7 bis 9 zeigen eine leicht abgewandelte Ausführungsform des oberen Werkzeugs 30. Demnach umfaßt dieses an seinem unteren Stirnende eine umlaufende Ringlippe 36 mit einer axialen Höhe h, welche in etwa 30 % der Blechdicke beträgt. Die Ringlippe 36 weist auf der radial inneren Seite eine konusförmige Fläche 38 auf, die den gleichen Konuswinkel aufweist wie die konusförmige Erhöhung 22. Diese Fläche 38 kommt bei der Verwendung der Werkzeuge 30 und 40 in Eingriff mit der konusförmige Erhöhung 22 radial außerhalb der Ringlippe 27 und sorgt für eine Zentrierung des Blechteils 20 in bezug auf den Gewindestift 10, wie in der Figur 8 gezeigt.

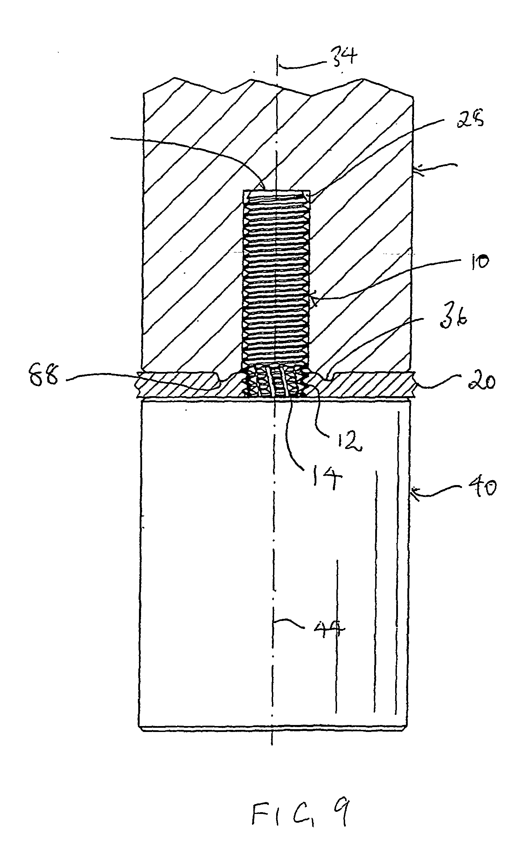

Bei einer weitergehenden Schließbewegung des oberen Werkzeugs 30 gegen die untere Matrize 40 drückt sich die Ringlippe 36 in das Blechmaterial des Blechteils 20 hinein und bildet eine ringförmige Vertiefung 88 im Blechteil 20 um den Gewindestift herum. Das Blechmaterial, das sich im Bereich der Ringvertiefung befand, wird zusammen mit dem Blechmaterial, das durch die Flachpressung der konusförmigen Erhöhung verdrängt wird, gezwungen, radial nach innen zu fließen in die Gewindegänge 12 des Gewindestifts und in die Verdrehsicherungsmerkmale bildenden Kerben 14 hinein. Auf diese Weise kann eine noch intensivere Verbindung des Blechmaterials mit dem Gewindestift erreicht werden. Es besteht auch die Möglichkeit (obwohl hier nicht gezeigt), die konusförmige Fläche 38 am unteren Stirnende des Werkzeugs 30 weiter nach oben zu führen, so daß das Blechmaterial, das aus dem Bereich der Ringvertiefung 88 verdrängt wird, nach oben in Figur 9 steigt, und die Verbindung zwischen dem Gewindestift 10 und dem Blechteil 20 über eine axiale Länge des Gewindestifts 10 erfolgt, die die Blechdicke übersteigt. Auch könnte eine gleichartige Wirkung erzielt werden, wenn das untere Werkzeug 40 mit einer entsprechenden ringförmigen Lippe vorgesehen wird, wobei das untere Ende des Gewindestifts dann in das untere Werkzeug 40 mindestens um einen entsprechenden Betrag hineinragen muß.

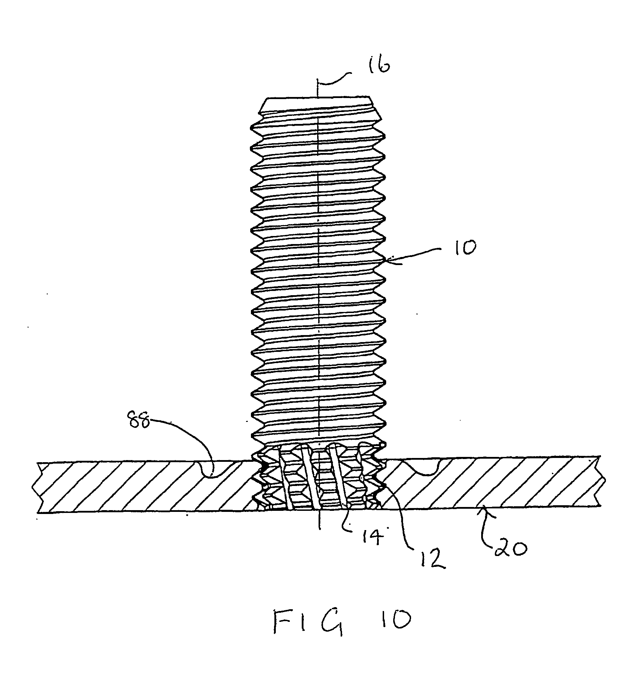

Figur 10 zeigt in einer vergrößerten Darstellung das Zusammenbauteil, das in Figur 9 hergestellt wurde, nach dessen Entfernung aus dem Bereich der Werkzeuge 30 und 40.

Die hier beschriebenen Funktionselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Gewindestifte alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Verfahren zur Herstellung eines Zusammenbauteils bestehend aus einem Blechteil (20) und einem an diesem angebrachten Gewindstift (16), d.h. ein Stift in Form einer Gewindelänge mit Außengewinde
**dadurch gekennzeichnet,**
**daß** im Blechteil eine konusförmige Erhöhung (22) mit einem mittig angeordneten Loch (18) erzeugt wird, wobei das Loch zumindest im wesentlichen dem Außendurchmesser des Gewindes des Gewindestifts (10) entspricht, dass ein Bereich (12) des Gewindestifts in das Loch (18) eingesetzt wird, wobei dieser Bereich des Gewindestifts, der in direkter Verbindung mit dem-Blechteil anzubringen ist, entweder von der Seite der konusförmigen Erhöhung (22) des Blechteiles oder von der anderen Seite in das Blechteil (20) eingeführt wird und dass die konusförmige Erhöhung (22) anschließend zumindest teilweise flach gepresst wird und hierdurch Blechmaterial radial nach innen in mehrere Gewindegänge des Gewindes (13) des Gewindestiftes (10) hinein geschoben wird.

2. Verfahren nach Anspruch 1,
**dadurch gekennzeichnet,**
**daß** der Bereich (12) des Gewindestifts (10), der in direkte Verbindung mit dem Blechmaterial gebracht werden soll, mit Verdrehsicherungsmerkmalen (14) ausgestattet ist, beispielsweise mit sich in Längsrichtung des Stiftes erstreckenden Vertiefungen, die das Gewinde (13) stellenweise unterbrechen, wobei das Blechmaterial sowohl in das Gewinde (13) als auch gegen die Verdrehsicherungsmerkmale (14) bzw. in etwaige eine Verdrehsicherung bildende Vertiefungen (14) geschoben wird.

3. Verfahren nach Anspruch 1 oder 2,
**dadurch gekennzeichnet,**
**daß** der Gewindestift (10) im Bereich seines einen Endes mit dem Blechteil (20) in Verbindung gebracht wird.

4. Verfahren nach Anspruch 2,
**dadurch gekennzeichnet,**
**daß** sich der Bereich des Gewindestiftes, der in direkte Verbindung mit dem Blechmaterial gebracht wird, zwischen den beiden Enden des Gewindestiftes befindet.

5. Verfahren nach einem der vorhergehenden Ansprüche,
**dadurch gekennzeichnet,**
**daß** die konusförmige Erhöhung (22) des Blechteils an der erhöhten Seite eine durch eine Ringfase (26) gebildete Mündung aufweist, wobei der Fasenwinkel der Ringfase zur axialen Richtung (16) des Loches zwischen 30° und 60°, vorzugsweise bei etwa 40° gewählt wird.

6. Verfahren nach Anspruch 5,
**dadurch gekennzeichnet,**
**daß** das Loch (18) selbst mit einer zylindrischen Wand (24) parallel zur Achse (16) des Loches ausgebildet ist, wobei die axiale Länge dieser zylindrischen Wand (24) im Bereich zwischen 40 und 100 % der Blechstärke, vorzugsweise bei etwa 60 % der Blechstärke liegt.

7. Verfahren nach einem der vorhergehenden Ansprüche,
**dadurch gekennzeichnet,**
**daß** ein Teil des Gewindestifts (10), der benachbart zu dem Bereich angeordnet ist, der in direkte Verbindung mit dem Blechteil (20) zu bringen ist, in eine Bohrung (28) eines Werkzeugs (30) aufgenommen wird, so daß der genannte Bereich vor einer Stirnseite (32) des Werkzeugs (30) vorsteht, daß das Blechteil (20) auf einer Unterlage (40) mit einer ebenen Stirnseite (42) abgestützt wird, wobei das Loch (18) in der konusförmigen Erhöhung (22) mit der Längsachse (16) des Gewindestifts (10) ausgerichtet wird und daß das Werkzeug (30) gegen das Blechteil (20) gedrückt wird, so daß der Bereich des Gewindestifts, der in direkte Verbindung mit dem Blechmaterial gebracht werden soll, in das Loch (18) des Blechteils eingeführt wird und die konusförmige Erhöhung (22) gleichzeitig zwischen dem Werkzeug (30) und der Unterlage (40) flachgepreßt wird.

8. Verfahren nach Anspruch 7,
**dadurch gekennzeichnet,**
**daß** die Unterlage einen gefederten Stößel (60) aufweist mit einem stiftartigen Ende; das durch die das Blechteil abstützende Seite (42) der Unterlage (40) hindurchragt und in die konusförmige Vertiefung (22) soweit hineinragt, daß das Blechteil (20) hierdurch zentriert wird, wobei die Unterlage (40) vorzugsweise in Form einer Matrize ausgebildet ist, die koaxial zum Gewindestift (10) und zur Bohrung (28) des Werkzeugs, die den Gewindestift (10) aufnimmt, angeordnet ist.

9. Verfahren nach einem der Ansprüche 7 oder 8,
**dadurch gekennzeichnet,**
**daß** das Werkzeug (30) um den vorstehenden Bereich des Gewindestifts (10) herum, eine über seine Stirnseite (32) vorstehende Ringlippe (36) aufweist, die in radialer Richtung vom Gewindestift (10) einen Abstand aufweist und dessen axiale Höhe (h) in Längsrichtung (16) des Gewindestifts kleiner ist als die Stärke des Blechmaterials und daß bei der Anbringung des Gewindestifts (10) am Blechteil (20) die Ringlippe (36) in das Blechmaterial hineingedrückt wird und eine entsprechende Ringvertiefung (88) im Blechmaterial ausbildet, wodurch ebenfalls Blechmaterial in das Gewinde (13) hineingedrückt und in Berührung mit etwaigen am Gewindestift (10) vorgesehenen Verdrehsicherungsmerkmalen (14) gebracht wird.

10. Verfahren nach Anspruch 9,
**dadurch gekennzeichnet,**
**daß** die Ringlippe (36) auf der radial inneren Seite eine Schrägfläche (38) aufweist, die zumindest im wesentlichen der Schrägfläche der konusförmigen Erhöhung (22) des Blechteils (20) entspricht, wodurch das Blechteil (20) zumindest im wesentlichen mit dem Gewindestift (10) bei dessen Anbringung zentriert wird.

11. Verfahren nach Anspruch 9 oder 10,
**dadurch gekennzeichnet,**
**daß** innerhalb der Ringlippe (36) eine Ringvertiefung vorgesehen ist, die von der Stirnseite des Werkzeuges zurückversetzt ist, wodurch Blechmaterial, das von der Ringlippe verschoben wird, auch in diese Ringvertiefung hineingedrückt wird und das Blechmaterial hierdurch in Berührung mit dem Gewindestift (10) über einen axialen Bereich gelangt, der die Blechstärke übersteigt.

12. Verfahren nach Anspruch 9, 10 oder 11,
**dadurch gekennzeichnet,**
**daß** die Unterlage (40), ausgerichtet mit dem Loch des Blechteils, eine Vertiefung aufweist, die einen Teil des Gewindestiftes aufnimmt und um den Gewindestift herum einen Freiraum bildet, in den Blechmaterial beim Anbringungsverfahren ebenfalls hineingedrückt wird, wodurch sich die Verbindung zwischen dem Blechteil (20) und dem Gewindestift (10) über eine axiale Länge des Gewindestifts (10) erstreckt, die die Blechdicke übersteigt.

13. Verfahren nach einem der vorhergehenden Ansprüche,
**dadurch gekennzeichnet,**
**dass** die Gewindegänge des Gewindestiftes (10), die in Berührung mit dem Blechteil (20) gelangen, mit einem Klebstoff versehen sind, der unter Druck aushärtet.

14. Zusammenbauteil bestehend aus einem Gewindestift und einem Blechteil, das nach dem Verfahren gemäß einem der vorhergehenden Ansprüche hergestellt ist.

15. Zusammenbauteil bestehend aus einem Gewindestift (10) und einem Blechteil (20), das nach dem Verfahren gemäß einem der vorhergehenden Ansprüche hergestellt ist, wobei der Gewindestift (10) ein Durchgangsloch im Blechteil (20) vollständig durchdringt und das Blechmaterial im Bereich des Durchganglochs vollständig in mehrere Gewindegänge des Gewindestifts (10) eingeformt ist und einen permanenten radialen Druck auf den Gewindestift ausübt.

16. Zusammenbauteil nach Anspruch 15,
**dadurch gekennzeichnet,**
**daß** im Bereich der Anbringung des Gewindestifts am Blechteil Verdrehsicherungsmerkmale, beispielsweise in Form von Vertiefungen, am Gewindestift vorgesehen sind und sich das Blechmaterial in formschlüssigem Eingriff mit den Verdrehsicherungsmerkmalen befindet.

17. Zusammenbauteil nach einem der vorhergehenden Ansprüche 14 bis 16,
**dadurch gekennzeichnet,**
**daß** die beiden Enden des Gewindestifts (10) aus entgegengesetzten Seiten des Blechteils (20) herausstehen, d.h. das Blechteil (20) in einem mittleren Bereich des Gewindestifts (10) an diesem befestigt ist.

18. Zusammenbauteil nach einem der Ansprüche 14 bis 17,
**dadurch gekennzeichnet,**
**daß** auf mindestens einer Seite des Blechteils (20) eine Ringvertiefung (88) vorgesehen ist, die den Gewindestift umgibt.

19. Zusammenbauteil nach Anspruch 18,
**dadurch gekennzeichnet,**
**daß** das Blechmaterial radial innerhalb der Ringvertiefung (88) eine erhöhte Anlage gegenüber der entsprechenden Oberfläche des Blechteils annimmt, wodurch die Anbindung des Gewindestifts (10) am Blechteil (20) über eine axiale Länge des Gewindestifts erfolgt, die die Blechdicke übersteigt.

20. Zusammenbauteil nach einem der Ansprüche 14 bis 19,
**dadurch gekennzeichnet,**
**dass** die Gewindegänge des Gewindestiftes (10), die in Berührung mit dem Blechteil (20) gelangen, mit einem Klebstoff versehen sind, der ausgehärtet ist.

## Claims

1. A method of manufacturing a component assembly consisting of a sheet metal part (20) and of a threaded pin (10), i.e. a pin in the form of a length of thread with an external thread,
**characterised in that**
a conical elevation (22) having a centrally arranged hole (18) is generated in the sheet metal part, with the hole at least substantially corresponding to the external diameter of the thread of the threaded pin (10); **in that** a region (12) of the threaded pin is inserted into the hole (18), with this region of the threaded pin, which is to be brought into direct contact with the sheet metal part, being introduced into the sheet metal part (20) either from the side of the conical elevation (22) of the sheet metal part or from the other side; and **in that** the conical elevation (22) is subsequently pressed flat at least partly and sheet metal material is hereby pushed radially inwardly into a plurality of thread turns of the thread (13) of the threaded pin (10).

2. A method in accordance with claim 1, **characterised in that** the region (12) of the threaded pin (10), which is to be brought into direct connection with the sheet metal material, is equipped with features (14) providing security against rotation, for example with recesses extending in the longitudinal direction of the pin which interrupt the thread (13) locally, with the sheet metal material being pushed both into the thread (13) and against the features (14) providing security against rotation or into any recesses (14) forming a security against rotation.

3. A method in accordance with claim 1 or claim 2, **characterised in that** the threaded pin (10) is brought into contact with the sheet metal part (20) in the region of the one end of said threaded pin.

4. A method in accordance with claim 2, **characterised in that** the region of the threaded pin which is brought into direct contact with the sheet metal material, is located between the two ends of the threaded pin.

5. A method in accordance with any one of the preceding claims, **characterised in that** the conical elevation (22) of the sheet metal part has an opening formed by a ring chamfer (26) at the elevated side, with the chamfer angle of the ring chamfer relative to the axial direction (16) of the hole being selected to be between 30° and 60°, preferably at approximately 40°.

6. A method in accordance with claim 5, **characterised in that** the hole (18) itself is made with a cylindrical wall (24) parallel to the axis (16) of the hole, with the axial length of this cylindrical wall (24) lying in the range between 40 and 100% of the sheet metal thickness, preferably at approximately 60% of the sheet metal thickness.

7. A method in accordance with any one of the preceding claims, **characterised in that** a part of the threaded pin (10), which is arranged adjacent to the region to be brought into direct contact with the sheet metal part (20), is received into a bore (28) of a tool (30) such that the said region projects in front of an end face (32) of the tool (30); **in that** the sheet metal part (20) is supported on a base (40) having a planar end face (42), with the hole (18) in the conical elevation (22) being aligned with the longitudinal axis (16) of the threaded pin (10); and **in that** the tool (30) is pressed towards the sheet metal part (20) such that the region of the threaded pin to be brought into direct contact with the sheet metal material is introduced into the hole (18) of the sheet metal part and the conical elevation (22) is simultaneously pressed flat between the tool (30) and the base (40).

8. A method in accordance with claim 7, **characterised in that** the base has a sprung plunger (60) with a pin-like end which projects through the side (42) of the base (40) supporting the sheet metal part and projects so far into the conical recess (22) that the sheet metal part (20) is hereby centred, with the base (40) preferably being made in the form of a die which is arranged coaxially to the threaded pin (10) and to the bore (28) of the tool which receives the threaded pin (10).

9. A method in accordance with any one of the claims 7 to 8, **characterised in that** the tool (30) has, around the projecting region of the threaded pin (10), a ring lip (36) which projects beyond its end face (32), has a spacing from the threaded pin (10) in the radial direction and an axial height (h) in the longitudinal direction (16) of the threaded pin smaller than the thickness of the sheet metal material; and **in that**, on the attachment of the threaded pin (10) to the sheet metal part (20), the ring lip (36) is pressed into the sheet metal material and forms a corresponding ring recess (88) in the sheet metal material, whereby sheet metal material is likewise pressed into the thread (13) and is brought into contact with any features (14) providing security against rotation and provided at the threaded pin (10).

10. A method in accordance with claim 9, **characterised in that** the ring lip (36) has a sloping surface (38) at the radially inner side which corresponds at least essentially to the sloping surface of the conical elevation (22) of the sheet metal part (20), whereby the sheet metal part (20) is at least substantially centred with the threaded pin (10) on its attachment.

11. A method in accordance with claim 9 or claim 10, **characterised in that** a ring recess is provided within the ring lip (36) and is set back from the end face of the tool, whereby sheet metal material displaced by the ring lip is also pressed into this ring recess and the sheet metal material hereby comes into contact with the threaded pin (10) over an axial region which is larger than the sheet metal thickness.

12. A method in accordance with claim 9, claim 10 or claim 11, **characterised in that** the base (40), aligned with the hole of the sheet metal part, has a recess which receives a part of the threaded pin and forms a free space around the threaded pin into which sheet metal material is likewise pressed in the attachment process, whereby the connection between the sheet metal part (20) and the threaded pin (10) extends over an axial length of the threaded pin (10) which is larger than the sheet metal thickness.

13. A method in accordance with any one of the preceding claims, **characterised in that** the threads of the threaded pin (10), which come into contact with the sheet metal part (20), are provided with an adhesive which is cured under pressure.

14. A component assembly consisting of a threaded pin and a sheet metal part which is manufactured by the method in accordance with any one of the preceding claims.

15. A component assembly consisting of a threaded pin (10) and a sheet metal part (20) which is manufactured by the method in accordance with any one of the preceding claims, wherein the threaded pin (10) fully penetrates a passage hole in the sheet metal part (20) and the sheet metal material is completely moulded into a plurality of threads of the threaded pin (10) in the region of the passage hole and exerts a permanent radial pressure onto the threaded pin.

16. A component assembly in accordance with claim 15, **characterised in that** features providing security against rotation, for example in the form of recesses, are provided at the threaded pin in the region of the attachment of the threaded pin to the sheet metal part and the sheet metal material is in shape-matched engagement with the features providing security against rotation.

17. A component assembly in accordance with any one of the preceding claims 14 to 16, **characterised in that** the two ends of the threaded pin (10) project from oppositely disposed sides of the sheet metal part (20), i.e. the sheet metal part (20) is secured to the threaded pin (10) in a central region thereof.

18. A component assembly in accordance with any one of the claims 14 to 17, **characterised in that** a ring recess (88), which surrounds the threaded pin, is provided on at least one side of the sheet metal part (20).

19. A component assembly in accordance with claim 18, **characterised in that** the sheet metal material adopts an elevated contact with respect to the corresponding surface of the sheet metal part radially inside the ring recess (8), whereby the connecting of the threaded pin (10) to the sheet metal part (20) is effected over an axial length of the threaded pin which is larger than the sheet metal thickness.

20. A component assembly in accordance with any one of the claims 14 to 19, **characterised in that** the threads of the threaded pin (10), which come into contact with the sheet metal part (20), are provided with an adhesive which is cured.

## Revendications

1. Procédé de fabrication d'un élément d'assemblage comprenant une pièce en tôle (20) et une tige filetée (10) montée sur celle-ci, c'est-à-dire une tige sous la forme d'un segment avec filetage extérieur, **caractérisé en ce que** :
- un rehaussement conique (22) comportant un trou (18) agencé au centre est produit dans la pièce en tôle (20), le trou correspondant au moins essentiellement au diamètre extérieur du filetage de la tige filetée (10) ;
- une région (12) de la tige filetée est mise en place dans le trou (18), de sorte que cette région de la tige filetée qui doit être montée en liaison directe avec la pièce en tôle est introduite soit depuis le côté du rehaussement conique (22) de la pièce en tôle, soit depuis l'autre côté dans la pièce en tôle (20) ; et
- le rehaussement conique (22) est ensuite aplati au moins partiellement par pressage et de cette manière, du matériau de tôle est poussé radialement vers l'intérieur dans plusieurs pas de vis du filetage (13) de la tige filetée (10).

2. Procédé selon la revendication 1, **caractérisé en ce que** la région (12) de la tige filetée (10) qui doit être amenée en liaison directe avec le matériau de tôle, est munie de moyens de sécurité anti-rotation (14), par exemple des renfoncements qui s'étendent dans la direction longitudinale de la tige et qui interrompent localement le filetage (13), le matériau de tôle étant poussé aussi bien dans le filetage (13) que contre les moyens de sécurité anti-rotation (14) ou dans des renfoncements éventuels (14) formant une sécurité anti-rotation.

3. Procédé selon l'une ou l'autre des revendications 1 et 2, **caractérisé en ce que** la tige filetée (10) est amenée en liaison avec la pièce en tôle (20) dans la région de l'une de ses extrémités.

4. Procédé selon la revendication 2, **caractérisé en ce que** la région de la tige filetée qui est amenée en liaison directe avec le matériau de tôle se trouve entre les deux extrémités de la tige filetée.

5. Procédé selon l'une des revendications précédentes, **caractérisé en ce que** le rehaussement conique (22) de la pièce en tôle présente sur le côté relevé une embouchure formée par un chanfrein annulaire 26, l'angle du chanfrein annulaire par rapport à la direction axiale (16) du trou étant choisi entre 30° et 60°, de préférence vers environ 40°.

6. Procédé selon la revendication 5, **caractérisé en ce que** le trou (18) lui-même est réalisé avec une paroi cylindrique (24) parallèle à l'axe (16) du trou, la longueur axiale de cette paroi cylindrique (24) se trouvant dans une plage entre 40 et 100% de l'épaisseur de tôle, de préférence vers environ 60% de l'épaisseur de tôle.

7. Procédé selon l'une des revendications précédentes, **caractérisé en ce que** :
- une partie de la tige filetée (10), qui est agencée voisine de la région qui doit être amenée en liaison directe avec la pièce en tôle (20), est reçue dans un perçage (28) d'un outil (30) de sorte que ladite région dépasse devant un côté frontal (32) de l'outil (30) ;
- la pièce en tôle (20) est soutenue sur un support (40) avec une face frontale plane (42), le trou (18) dans le rehaussement conique (22) étant orienté avec l'axe longitudinal (16) de la tige filetée (10) ; et
- l'outil (30) est pressé contre la pièce en tôle (20) de sorte que la région de la tige filetée, qui doit être amenée en liaison directe avec le matériau de tôle, est introduite dans le trou (18) de la pièce en tôle et le rehaussement conique (22) est aplati simultanément par pressage entre l'outil (30) et le support (40).

8. Procédé selon la revendication 7, **caractérisé en ce que** le support présente un coulisseau (60) chargé par ressort comprenant une extrémité analogue à une goupille qui traverse le côté (42) du support (40), qui soutient la pièce en tôle, et vient en saillie jusque dans le renfoncement conique (22) de manière à centrer ainsi la pièce en tôle (20), le support (40) étant réalisé de préférence sous la forme d'une matrice qui est agencée coaxialement par rapport à la tige filetée (10) et par rapport au perçage (28) de l'outil qui reçoit la tige filetée (10).

9. Procédé selon l'une ou l'autre des revendications 7 et 8, **caractérisé en ce que** :
- l'outil (30) présente, autour de la zone en saillie de la tige filetée (10), une lèvre annulaire (36) qui dépasse au-delà de sa face frontale (32) et qui présente une distance en direction radiale par rapport à la tige filetée (10) et dont la hauteur axiale (h) dans la direction longitudinale (16) de la tige filetée est plus petite que l'épaisseur du matériau de tôle ; et
- lorsque la tige filetée (10) est mise en place sur la pièce en tôle (20), la lèvre annulaire (36) est pressée dans le matériau de tôle et un renfoncement annulaire correspondant (88) est formé dans le matériau de tôle, grâce à quoi du matériau de tôle est également pressé dans le filetage (13) et est amené en contact avec des moyens de sécurité anti-rotation (14) éventuels, prévus sur la tige filetée (10).

10. Procédé selon la revendication 9, **caractérisé en ce que** la lèvre annulaire (36) présente sur le côté radialement intérieur une surface oblique (38) qui correspond au moins essentiellement à la surface oblique du rehaussement conique (22) de la pièce en tôle (20), grâce à quoi la pièce en tôle (20) est centrée au moins essentiellement avec la tige filetée (10) lorsque celle-ci est mise en place.

11. Procédé selon l'une ou l'autre des revendications 9 et 10, **caractérisé en ce qu'**un renfoncement annulaire est prévu à l'intérieur de la lèvre annulaire (36), lequel est en retrait de la face frontale de l'outil, grâce à quoi du matériau de tôle qui est déplacé par la lèvre annulaire est aussi pressé dans ce renfoncement annulaire et, de cette manière, le matériau de tôle vient en contact avec la tige filetée (10) sur une zone axiale qui dépasse l'épaisseur de tôle.

12. Procédé selon l'une des revendications 9, 10 ou 11, **caractérisé en ce que** le support (40) présente, en alignement avec le trou de la pièce en tôle, un renfoncement qui reçoit une partie de la tige filetée et qui forme tout autour de la tige filetée un espace libre dans lequel du matériau de tôle est également pressé pendant la procédure de mise en place, grâce à quoi la liaison entre la pièce en tôle (20) et la tige filetée (10) s'étend sur une longueur axiale de la tige filetée (10) qui dépasse l'épaisseur de tôle.

13. Procédé selon l'une des revendications précédentes, **caractérisé en ce que** les pas de vis de la tige filetée (10) qui viennent en contact avec la pièce en tôle (20) sont pourvus d'une colle qui durcit sous pression.

14. Élément d'assemblage comprenant une tige filetée et une pièce en tôle et qui est fabriqué selon le procédé conformément à l'une des revendications précédentes.

15. Élément d'assemblage comprenant une pièce en tôle (20) et une tige filetée (10) et qui est fabriqué selon le procédé conformément à l'une des revendications précédentes, dans lequel la tige filetée (10) traverse entièrement un trou de passage dans la pièce en tôle (20) et dans lequel le matériau de tôle est enfoncé entièrement dans plusieurs pas de vis de la tige filetée (10) dans la région du trou de passage et exerce une pression radiale permanente sur la tige filetée.

16. Élément d'assemblage selon la revendication 15, **caractérisé en ce que** des moyens de sécurité anti-rotation, exemple sous la forme de renfoncements, sont prévus sur la tige filetée dans la région de la mise en place de la tige filetée sur la pièce en tôle et **en ce que** le matériau de tôle se trouve en engagement par coopération de formes avec les moyens de sécurité anti-rotation.

17. Élément d'assemblage selon l'une des revendications précédentes 14 à 16, **caractérisé en ce que** les deux extrémités de la tige filetée (10) dépassent des côtés opposés de la pièce en tôle (20), c'est-à-dire que la pièce en tôle (20) est fixée sur la tige filetée (10) dans une région médiane de celle-ci.

18. Elément d'assemblage selon l'une des revendications 14 à 17, **caractérisé en ce que** sur au moins un côté de la pièce en tôle (20) est prévu un renfoncement annulaire (88) qui entoure la tige filetée.

19. Elément d'assemblage selon l'une des revendications 18, **caractérisé en ce que** le matériau de tôle adopte radialement à l'intérieur du renfoncement annulaire (88) une position surélevée par rapport à la surface correspondante de la pièce en tôle, grâce à quoi la liaison de la tige filetée (10) sur la pièce en tôle (20) a lieu sur une longueur axiale de la tige filetée qui dépasse l'épaisseur de tôle.

20. Elément d'assemblage selon l'une des revendications 14 à 19, **caractérisé en ce que** les pas de vis de la tige filetée (10) qui viennent en contact avec la pièce en tôle (20) sont pourvus d'une colle qui est durcie.
